# FASCICULE DE BREVET EUROPEEN

(11) **EP 3 034 336 B1**
(45) Date de publication et mention de la délivrance du brevet: **15.08.2018**
(21) Numéro de dépôt: 14198642.2
(22) Date de dépôt: 17.12.2014
(51) Int. Cl.: B60H 1/00, B60H 1/24, B60H 1/26

(54) **Agencement de volet de ventilation adapté pour être installé sur une paroi de séparation de deux espaces**
Angepasste Lüftungsklappenanordnung zum Einbau in eine Trennwand zwischen zwei Bereichen
Air louvre arrangement suitable for being installed on a wall for separating two spaces

(43) Date de publication de la demande: 22.06.2016
(73) Titulaire: Pommier, 95310 Saint Ouen l'Aumone (FR)
(72) Inventeur: Guidetti, Stefano, 42023 Cadelbosco di Sopra Reggio Emilia (IT)
(74) Mandataire: Thinat, Michel

(56) Documents cités:
- EP-A1- 0 071 077
- CN-U- 202 703 186
- FR-A1- 2 256 377
- US-A- 4 522 115
- US-A1- 2007 190 919

## Description

L'invention concerne un agencement de volet de ventilation adapté pour être installé sur une paroi de séparation de deux espaces, dans une ouverture traversant cette paroi.

Les volets de ventilation de ce type, qui sont connus présentent l'inconvénient majeur qu'il nécessite de la main d'oeuvre importante pour la pose et la finition, dans la mesure où les volets doivent être insérés dans une ouverture que l'opérateur doit préparer et apprêter pour la réception d'un volet. Cette opération est longue car elle implique la mise en place d'un matériau d'étanchéité par le document FR 2 256 377 décrit un tel agencement de volet de ventilation. L'invention a pour but de pallier cet inconvénient.

Pour atteindre ce but, l'agencement du volet de ventilation selon l'invention comprend les caractéristiques de la revendication 1. L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un agencement de volet de ventilation selon l'invention ;
- la figure 2 est une vue en coupe longitudinalement le long de la ligne II-II de la figure 1 ;
- la figure 3 est une vue à plus grande échelle de la partie en cercle III de la figure 2 ;

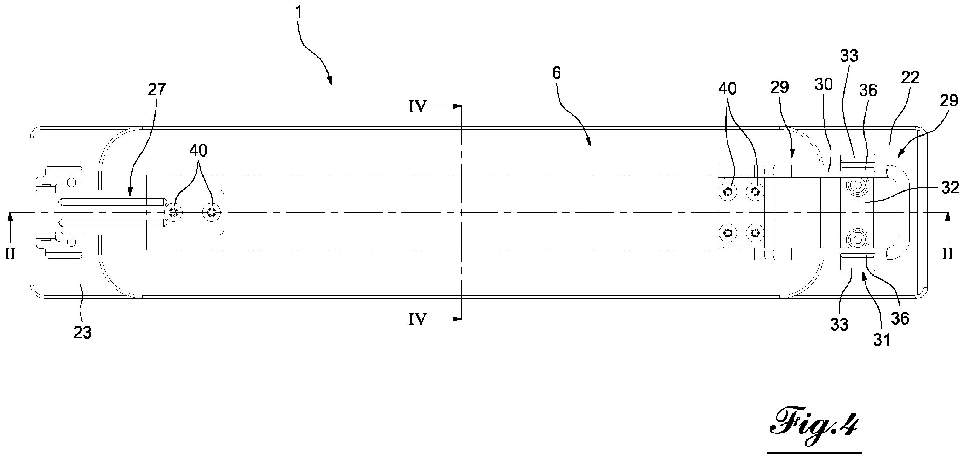

- la figure 4 est une vue de dessus de l'agencement de la figure 1 ;
- la figure 5 est une vue en coupe selon la ligne V-V de la figure 4 ;
- la figure 6 est une vue latérale de l'agencement de la figure 1, montrant celui-ci dans sa position ouverte ;
- la figure 7 est une vue de dessus correspondant de l'agencement de la figure 6, et
- la figure 8 est une vue en perspective, éclatée de l'agencement de volet de ventilation selon l'invention.

L'agencement de volet de ventilation selon l'invention, noté 1, est en mesure d'accomplir deux fonctions différentes. Il peut être installé sur les faces avant et arrière d'un véhicule et permettre la ventilation d'un véhicule frigorifique lorsque celui-ci n'est pas en fonction frigorifique. Il peut aussi être installé sur une cloison mobile et permettre la décompression lorsque la cloison mobile doit être déplacée.

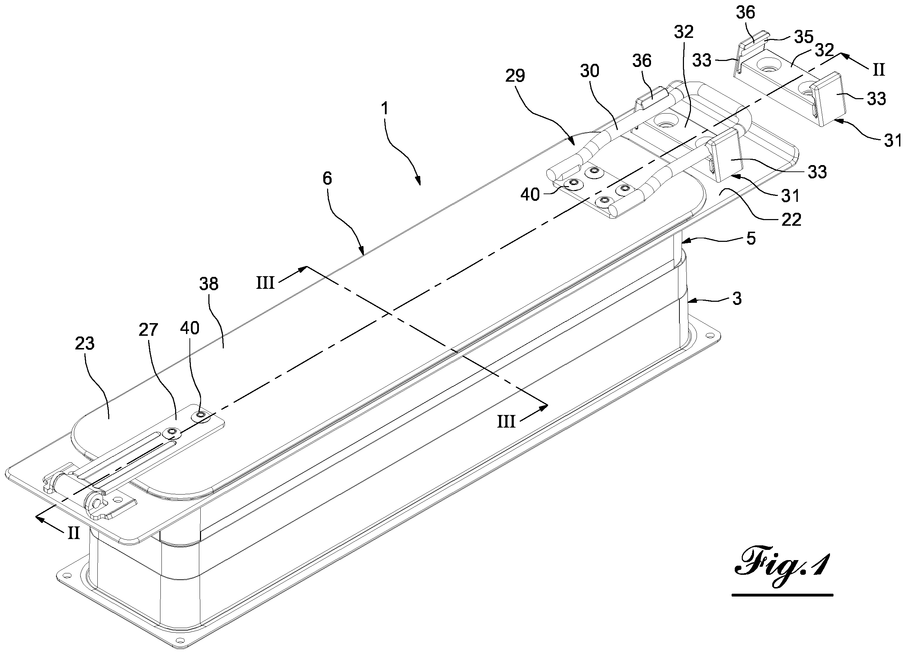

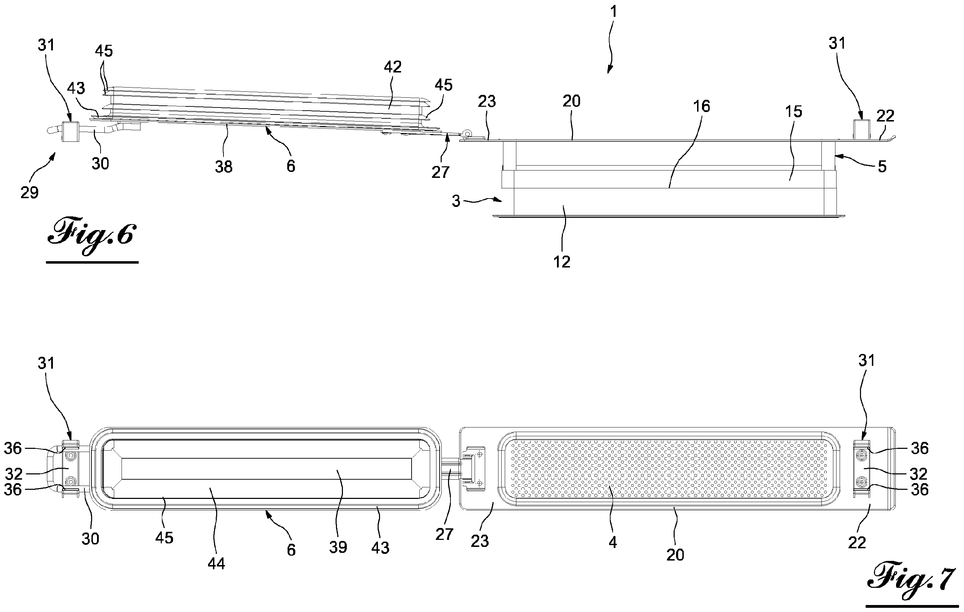

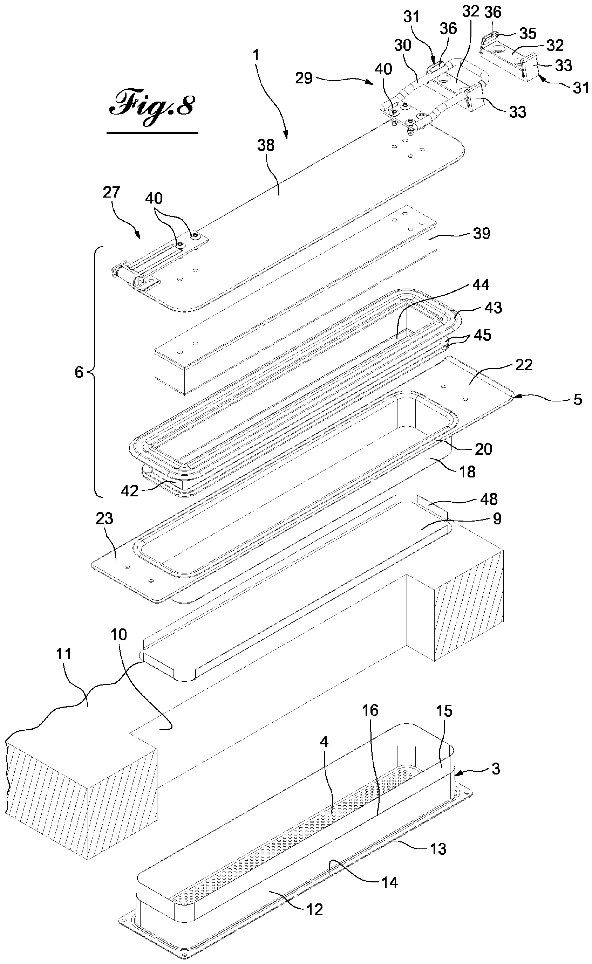

Comme le montre notamment la figure 8, l'agencement de volet 1 selon l'invention comporte essentiellement deux modules, à savoir un premier module 3 pourvu d'une grille de ventilation 4 et un deuxième module 5 sur lequel est articulé un couvercle 6 susceptible de pivoter entre une position de l'agencement, montrée à la figure 6 et une position de fermeture conformément à la figure 1. Une moustiquaire 9 peut être placée dans le module 3, par exemple si l'agencement est monté dans une paroi extérieure.

Lors de l'installation d'un agencement 1 dans une ouverture 10 d'une paroi ou d'un panneau d'une paroi 11 par exemple d'un véhicule frigorifique, chaque module est inséré dans cette ouverture à partir d'une face de la paroi et est ensuite fixé sur le pourtour de l'ouverture de la face à partir de laquelle il s'étend dans l'ouverture. A cette fin, chaque module comporte une partie en forme d'une jupe et, solidaire de l'extrémité extérieure de celui-ci, une embase pour la fixation du module sur la face correspondante de la paroi.

Ainsi, le modèle 3 comprend une jupe 12 et une embase périphérique 13 dont la face intérieure 14 est adaptée pour permettre la fixation, par exemple par collage, du module sur le pourtour de l'orifice 10. La longueur de la jupe peut être variable pour permettre l'adaptation du module à différente épaisseur de paroi. Sur les dessins, à titre d'exemple, la jupe 12 est conçue pour être adaptée à deux épaisseurs de paroi, à savoir une épaisseur par exemple de 45 à 70 mm et de 70 à 110 mm. A cette fin, la jupe comporte à son extrémité inférieure une portion 15 qui peut être enlevée le long d'une ligne de découpe 16 préétablie de toute manière appropriée connu en soi.

Le second module 5 comporte une partie de jupe 18 et une embase périphérique 20 dont les extrémités longitudinales 22, 23 sont configurées en pattes de montage.

La patte 23 est destinée au montage pivotant du couvercle 6 à l'aide du dispositif d'articulation 27 dont l'axe d'articulation s'étend perpendiculairement à l'axe longitudinal du module et qui est fixé par une extrémité sur la patte 23 et par l'autre extrémité sur le couvercle. Sur l'autre patte 22 du module est monté le dispositif 29 de verrouillage du couvercle dans sa position de fermeture. Ce dispositif comporte une languette 30 réalisé à titre d'exemple sous forme d'un fil de fer de gâche, dont une extrémité est fixée sur le couvercle et dont l'autre extrémité est susceptible de s'engager dans un organe 31 de verrouillage élastiquement déformable entre une position de blocage de la languette et une position de libération de cette dernière.

Plus précisément, l'organe 31 présente la forme d'un U dont la base 32 est fixée sur la patte 22 et qui comprend deux branches 33 qui sont élastiquement déplaçables entre les positions de verrouillage et de libération de la languette 30. A cette fin, l'extrémité de chaque branche est réalisée sous forme d'un crochet de verrouillage 35 destiné à venir en prise sur la languette pour la verrouiller dans la position de fermeture du couvercle sur le module 5, tandis que les surfaces supérieures des branches ont des formes de rampe inclinées 36 destinées à assurer l'écartement latéral des branches pour permettre le passage de la languette dans sa position de verrouillage lorsque la languette est poussée sur les rampes.

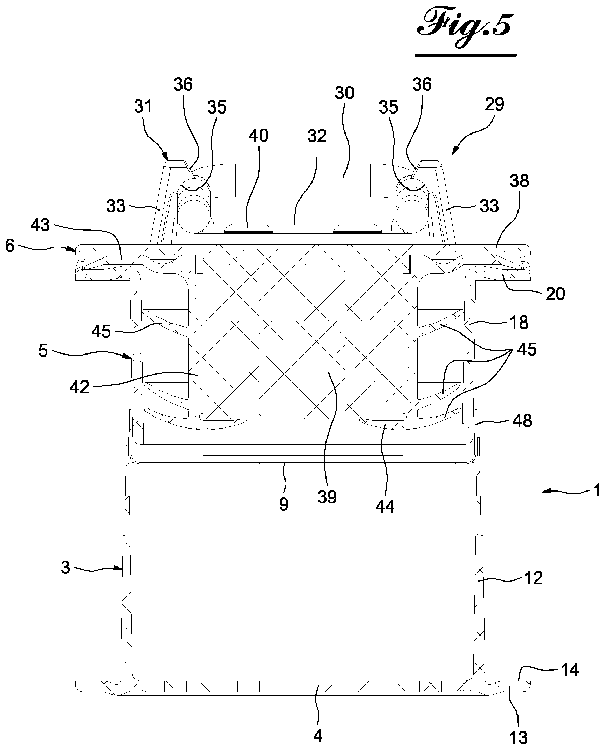

Concernant la moustiquaire 9, avantageusement réalisée sous forme d'un film moustiquaire, il est de préférence inséré dans le chevauchement des jupes 12 et 18 des modules 3 et 5, comme on le voit sur la figure 5 sur laquelle les rebords 48 sont pris entre les extrémités précités des jupes.

Il est à noter qu'un dispositif 31 peut aussi être prévu du côté du dispositif d'articulation, sur la paroi 11, qui permet de verrouiller le couvercle 6 également dans sa position d'ouverture.

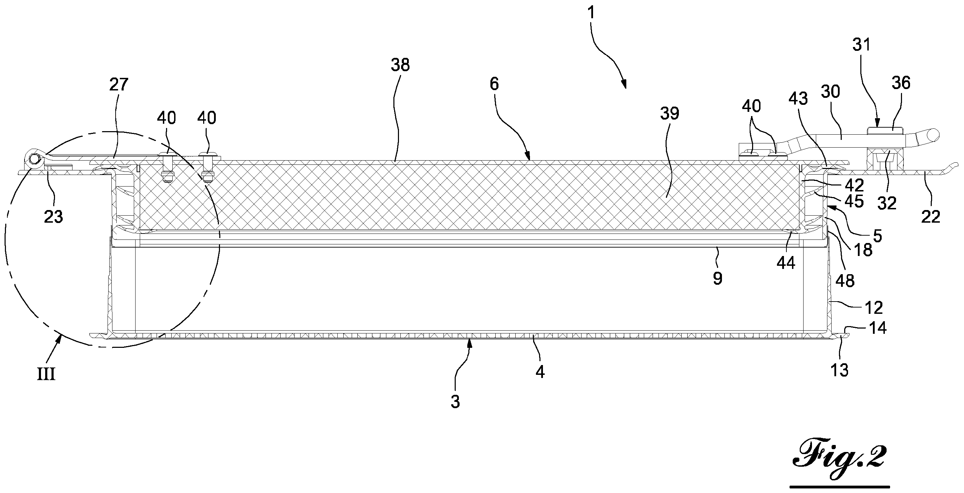

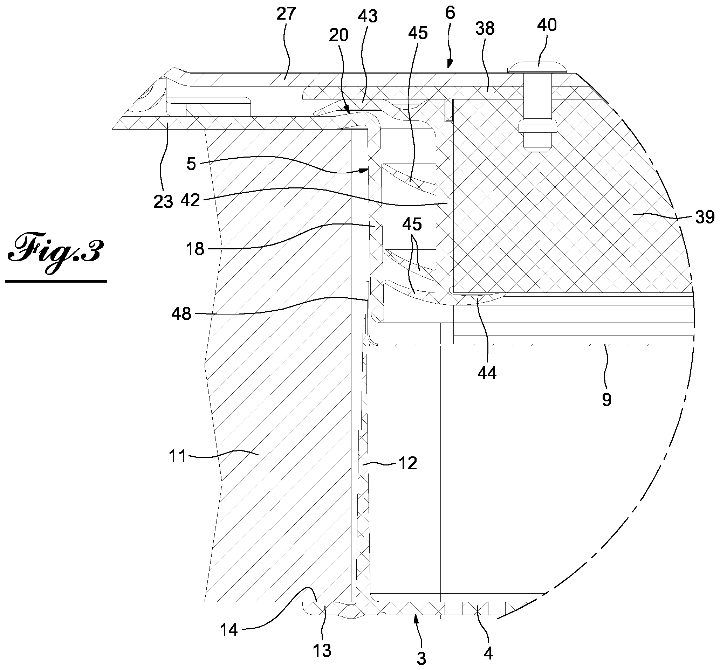

Le couvercle 6 se compose de plusieurs éléments, à savoir une plaque extérieure de forme rectangulaire sur la face extérieure de laquelle, au niveau des extrémités, sont fixés le dispositif d'articulation 27 et la languette 30 du dispositif de verrouillage 29 du couvercle, un corps 39 de forme parallélépipédique et réalisé avantageusement en polyuréthane, qui est fixé sur la face interne de la plaque 38, ainsi qu'une pièce en forme d'un cadre 42 qui entour le corps 39. Le cadre rectangulaire 42 comporte à son extrémité supérieure un rebord périphérique 43 qui s'étend vers l'extérieur et à son extrémité inférieure un rebord périphérique 45 qui s'étend vers l'intérieur. Le rebord 43 permet la fixation du cadre sous la plaque 38 tandis que le rebord inférieur 44 vient en prise en dessous de la face inférieure du corps 39, comme on le voit notamment sur les figures 2 et 3. Le cadre 42 comporte en outre, sur sa face latérale une pluralité de lèvres d'étanchéité périphériques 45 qui sont configurées pour être en contact par leurs extrémités libres avec la face interne de la jupe 18 du module 5. Des vis 40 assurent l'assemblage de la plaque 38 au corps 39 ainsi que la fixation d'une extrémité du dispositif 29 de verrouillage du couvercle et d'une extrémité du dispositif d'articulation 27 sur la face extérieure de la plaque 38.

Il ressort de la description qui précède que l'installation du dispositif volet de ventilation selon l'invention est extrêmement simple à mettre en oeuvre et nécessite aucune opération de mise en place d'une matière polymérisable de finition dans l'ouverture de réception.

Bien entendu l'agencement selon l'invention peut être modifié de multiples manières, sans sortir du cadre de l'invention. Ainsi l'adaptation de l'agencement à différentes épaisseurs de paroi peut être réalisée, le cas échéant supplémentairement à la configuration d'au moins une jupe sous forme d'au moins deux zones successives dans la direction longitudinale de la jupe, séparable le long d'une ligne de séparation périphérique, par un engagement télescopique plus ou moins important des extrémités des deux jupes. Les dispositifs d'articulation et de verrouillage du couvercle peuvent également être réalisés de diverses manières.

## Revendications

1. Agencement de volet de ventilation adapté pour être installé sur une paroi de séparation de deux espaces, dans une ouverture traversant cette paroi, et comprenant un premier module (3) adapté pour être introduit dans l'ouverture à partir d'une face de la paroi (11), et un second module (5) adapté pour être introduit dans l'ouverture à partir de l'autre face de la paroi (11), et un couvercle (6) déplaçable entre une position de fermeture de l'ouverture et une position de dégagement de celle-ci, chaque module (3, 5) comprenant une partie en forme de jupe (12, 18) destinée à s'engager dans l'ouverture et, à l'extrémité de la jupe, une embase périphérique (13, 20) permettant la mise en place du module sur la face extérieure correspondante de la paroi, les deux modules (3, 5) dans leur position mise en place dans l'ouverture établissant un passage à travers la paroi (11) qui est isolée des surfaces internes de l'ouverture (10), les extrémités inférieures des jupes (12, 18) des deux modules se chevauchant téléscopiquement à l'intérieur de l'ouverture, **caractérisé en ce que** chaque embase périphérique (13, 20) des modules (3, 5) est réalisée sous forme d'une embase de fixation du module sur la face extérieure de la paroi, et **en ce que** le couvercle (6) est monté sur l'embase de l'un des deux modules, pivotant entre ces positions de fermeture et de dégagement de l'ouverture.

2. Agencement selon la revendication 1, **caractérisé en ce que** le couvercle (6) comporte une partie (39) adaptée pour s'engager dans l'espace de la jupe (18) du module (5) sur lequel le couvercle est articulé, qui est pourvu sur sa face latérale de moyens périphériques d'étanchéité, tels que des lèvres d'étanchéité (45), qui sont en contact avec la face interne de la jupe (18).

3. Agencement selon l'une des revendications 1 ou 2, **caractérisé en ce que** l'embase (20) du second module (5) comprend, à ses deux extrémités opposées, des pattes (22, 23) dont l'une (23) permet la fixation du dispositif d'articulation (27) du couvercle, tandis que l'autre est prévue pour la fixation du dispositif de verrouillage du couvercle dans sa position fermée.

4. L'agencement selon l'une des revendications 1 à 3, **caractérisé en ce qu'**il est adaptable à des épaisseurs de paroi différentes par un engagement télescopique plus ou moins profond des extrémités des deux jupes (12, 18).

5. Agencement selon l'une des revendications 1 à 4, **caractérisé en ce qu'**elle est adaptable à différentes épaisseurs de paroi grâce à la réalisation d'au moins une jupe sous forme d'au moins deux zones successives dans la direction longitudinale de la jupe, qui sont séparables le long d'une ligne de séparation périphérique.

6. Agencement selon l'une des revendications 4 ou 5, **caractérisé en ce qu'**il comporte une moustiquaire (9) fixée par ses bords (48) dans l'espace de chevauchement des jupes (12, 18) des deux modules (3, 5).

## Patentansprüche

1. Lüftungsklappenanordnung, die ausgebildet ist, um in einer Trennwand von zwei Räumen in einer Öffnung, die diese Wand durchquert, installiert zu sein, und umfassend ein erstes Modul (3), das ausgebildet ist, um in die Öffnung ab einer Fläche der Wand (11) eingesetzt zu sein, und ein zweites Modul (5), das ausgebildet ist, um in die Öffnung ab der anderen Fläche der Wand (11) eingesetzt zu sein, und einen Deckel (6), der zwischen einer Verschlussposition der Öffnung und einer Freigabeposition derselben bewegbar ist, wobei jedes Modul (3, 5) einen Teil in Form einer Schürze (12, 18), die bestimmt ist, in die Öffnung einzugreifen, und am Ende der Schürze eine periphere Basis (13, 20)umfasst, die das Platzieren des Moduls auf der entsprechenden Außenfläche der Wand erlaubt, wobei die zwei Module (3, 5) in ihrer Platzierungsposition in der Öffnung einen Durchgang durch die Wand (11) herstellen, der von den inneren Flächen der Öffnung (10) isoliert ist, wobei die unteren Enden der Schürzen (12, 18) der zwei Module sich im Inneren der Öffnung teleskopisch überlappen, **dadurch gekennzeichnet, dass** jede periphere Basis (13, 20) der Module (3, 5) in Form einer Befestigungsbasis des Moduls auf der Außenfläche der Wand ausgebildet ist und dass der Deckel (6) auf der Basis von einem der zwei Module zwischen dieser Verschluss- und Freigabeposition der Öffnung verschwenkbar angebracht ist.

2. Anordnung nach Anspruch 1, **dadurch gekennzeichnet, dass** der Deckel (6) einen Teil (39) aufweist, der ausgebildet ist, um in den Raum der Schürze (18) des Moduls (5) einzugreifen, an dem der Deckel angelenkt ist, der auf seiner seitlichen Fläche mit peripheren Dichtigkeitsmitteln wie Dichtungslippen (45) ausgestattet ist, die mit der inneren Fläche der Schürze (18) in Kontakt sind.

3. Anordnung nach einem der Ansprüche 1 oder 2, **dadurch gekennzeichnet, dass** die Basis (20) des zweiten Moduls (5) an ihren zwei gegenüberliegenden Enden Zungen (22, 23) umfasst, von denen die eine (23) die Befestigung der Gelenkvorrichtung (27) des Deckels erlaubt, wogegen die andere für die Befestigung der Verriegelungsvorrichtung des Deckels in seiner geschlossenen Position vorgesehen ist.

4. Anordnung nach einem der Ansprüche 1 bis 3, **dadurch gekennzeichnet, dass** sie durch ein teleskopisches, mehr oder weniger tiefes Eingreifen der Enden der zwei Schürzen (12, 18) an verschiedene Wandstärken anpassbar ist.

5. Anordnung nach einem der Ansprüche 1 bis 4, **dadurch gekennzeichnet, dass** sie dank der Ausbildung mindestens einer Schürze in Form von mindestens zwei in der Längsrichtung der Schürze aufeinanderfolgenden Zonen, die entlang einer peripheren Trennlinie trennbar sind, an verschiedene Wandstärken anpassbar ist.

6. Anordnung nach einem der Ansprüche 4 oder 5, **dadurch gekennzeichnet, dass** sie einen Insektenschutz (9) umfasst, der anhand seiner Ränder (48) im Überlappungsbereich der Schürzen (12, 18) der zwei Module (3, 5) befestigt ist.

## Claims

1. An air louvre arrangement suitable for being installed on a wall for separating two spaces, in an opening traversing this wall, and comprising a first module (3) suitable for being introduced into the opening from a face of the wall (11), and a second module (5) suitable for being introduced into the opening from the other face of the wall (11), and a cover (6) movable between a closing position of the opening and a freed position of the latter, each module (3, 5) comprising a skirt-forming part (12, 18) intended to engage in the opening and, at the end of the skirt, a peripheral base (13, 20) allowing the placement of the module on the corresponding outer face of the wall, the two modules (3, 5) in their position placed in the opening establishing a passage through the wall (11) that is isolated from the inner surfaces of the opening (10), the lower ends of the skirts (12, 18) of the two modules telescopically overlapping inside the opening,
**characterized in that** each peripheral base (13, 20) of the modules (3, 5) is made in the form of a base for fastening the module on the outer face of the wall, and **in that** the cover (6) is mounted on the base of one of the two modules, pivoting between these closing and freed positions of the opening.

2. The arrangement according to claim 1, **characterized in that** the cover (6) includes a part (39) suitable for engaging in the space of the skirt (18) of the module (5) on which the cover is articulated, which is provided on its lateral face with peripheral sealing means, such as sealing lips (45), which are in contact with the inner face of the skirt (18).

3. The arrangement according to one of claims 1 or 2, **characterized in that** the base (20) of the second module (5) comprises, at its two opposite ends, tabs (22, 23), one of which (23) allows the articulation device (27) of the cover to be fastened, while the other is provided for the fastening of the locking device of the cover in its closed position.

4. The arrangement according to one of claims 1 to 3, **characterized in that** it is adaptable to different wall thicknesses by a more or less deep telescoping engagement of the ends of the two skirts (12, 18).

5. The arrangement according to one of claims 1 to 4, **characterized in that** it is adaptable to different wall thicknesses owing to the production of at least one skirt in the form of at least two successive zones in the longitudinal direction of the skirt, which are separable along a peripheral separating line.

6. The arrangement according to one of claims 4 or 5, **characterized in that** it includes a mosquito net (9) fastened by its edges (48) in the overlapping space of the skirts (12, 18) of the two modules (3, 5).
